# EUROPEAN PATENT SPECIFICATION

(11) **EP 0 572 091 B1**
(45) Date of publication and mention of the grant of the patent: **15.10.1997**
(21) Application number: 93201516.7
(22) Date of filing: 26.05.1993
(51) Int. Cl.: A01M 7/00

(54) **Device for spraying a liquid over a field**
Vorrichtung zum Sprühen einer Flüssigkeit auf Felder
Dispositif pour pulvériser un liquide sur des champs

(30) Priority: 27.05.1992 NL 9200936
(43) Date of publication of application: 01.12.1993
(73) Proprietor: Greenland Nieuw-Vennep B.V., 2153 LR Nieuw-Vennep (NL)
(72) Inventor: Beijaard, Martinus Johannes Antonius, NL-1566 NE Assendelft (NL)
(74) Representative: Hoorweg, Petrus Nicolaas

(56) References cited:
- EP-A- 0 103 522
- EP-A- 0 223 170
- EP-A- 0 280 666
- EP-A- 0 343 547
- EP-A- 0 494 125
- DD-A- 91 743
- US-A- 5 000 385

## Description

The invention relates to a device for spraying a liquid, such as herbicides, growth regulating and/or disinfectant substances, etc. over a field, said device comprising a boom with spray nozzles to be moved over said field and extending transversely of the travel direction, said boom being suspended for pivoting in or close to its central vertical plane on a mobile support frame, wherein at least a pair of return members are arranged on either side of and at an equal distance from the point of suspension.

Said booms, as disclosed in DD-A-91 743, have a relatively great length in order to enable spraying of a broad strip with a driving movement over the field. The problems with such devices are the stabilizing of the boom, because the mobile support frame, usually a tractor, accurately follows the ground profile, while the boom must remain extending parallel to the surface of the field. This means that rapid changes of the spacial position of the tractor do not have to be followed by the boom, while slow changes do.

The invention has for its object to provide a device which fulfills the above stated requirements and is moreover of a simple construction. The device according to the invention is distinguished in that the point of suspension is a universal pivot directly supported on said frame and situated close to the centre of gravity of the boom.

The return member is preferably a damped spring system.

The invention is elucidated further with reference to a figure description of an embodiment. In the drawing:

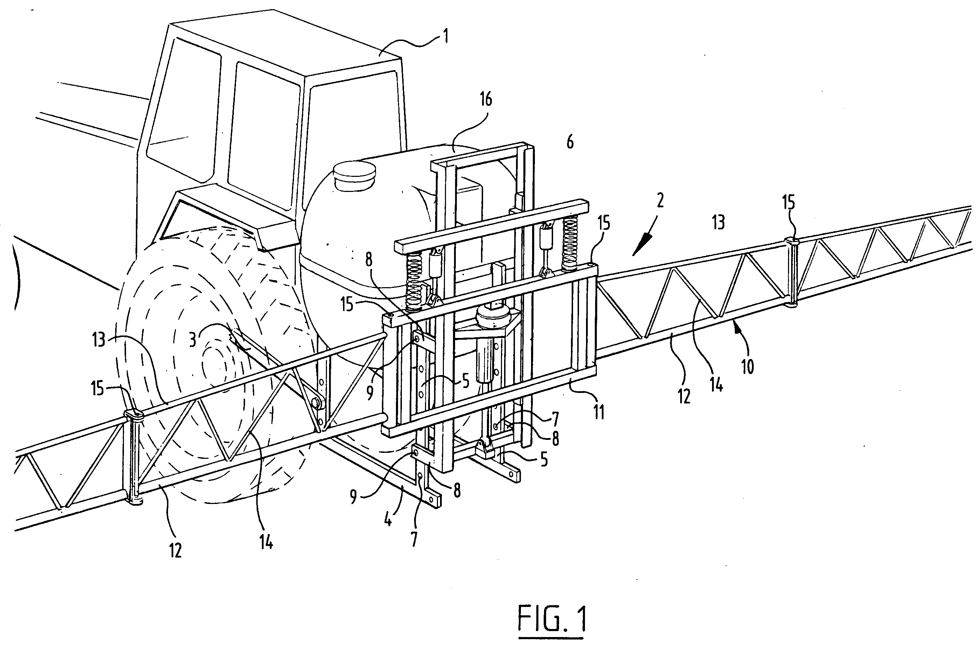

fig. 1 shows a perspective rear view of an agricultural tractor provided with a device according to the invention, which is suspended from the three-point suspension of the tractor,
fig. 2 and 3 show a perspective rear view corresponding with fig. 1 of a detail of the device of fig. 1 on enlarged scale, embodied with the suspension point in two embodiments and with spring/damping systems according to the invention.

Designated in the figures with the numeral 1 is the mobile support frame which is embodied here as an agricultural tractor. The spraying device 2 is coupled to the agricultural tractor via the three-point suspension 3.

The spraying device 2 has coupled to the three-point suspension a frame 4 provided with two parallel posts 5, onto which can be arranged a second frame 6 adjustable in vertical sense. For this purpose each post 5 is embodied with holes 7. Frame 6 is embodied with two pairs of forward pointing arms 8, each of which is provided with a hole 9. The holes 9 and the holes 7 can be placed mutually in line so that a pin (not shown) can be pushed therethrough. The frame 6 can herewith be adjusted in height relative to the frame 4.

Frame 6 serves respectively as carrier and guide for a spray boom 10 which can have any random construction.

The spray boom 10 here consists of two sections, to the right and left side of tractor 1 and a middle section 11 which is coupled to frame 6. The left and right wing section of spray boom 10 is a frame with a bottom beam 12, top beam 13 and stiffening struts 14. The wing sections can be built up of mutually pivotal parts, for which purpose a pivot 15 is arranged. The construction of this spray boom is known per se and otherwise falls outside the scope of the invention. The boom serves as carrier for spray nozzles (not shown) which are connected via conduits to a storage tank 16 on the front side of the second frame 6 and carried by the frame 4.

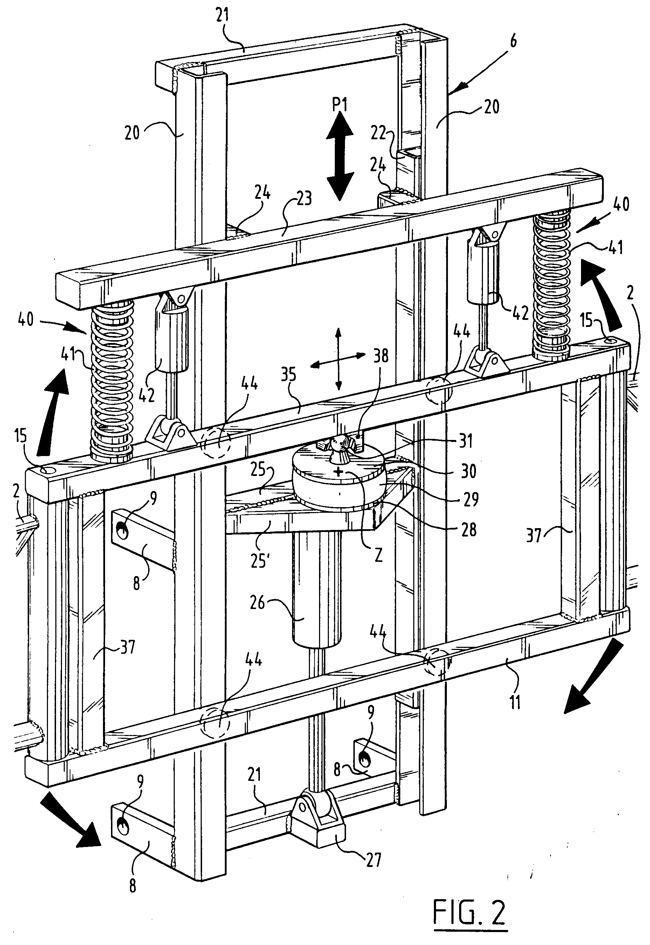

There now follows a description with reference to fig. 2 of the suspension of spray boom 2 and frame 11 respectively relative to the frame 6. The same reference numerals are used for the same elements.

The second frame 6 consists of two vertical U-shaped profiles 20, which are mutually connected at the top and bottom by profiles 21 such that the flanges of the U-profiles point toward each other.

The channel-like recesses in the U-profiles serve in each case as guide for a U-profile 22, the flanges of which point toward those of the U-profile 20. These two U-profiles are connected at the top by a profile 23 with forward pointing connecting supports 24 and by a profile 25 close to the centre. Profile 25 is widened in top view with a triangular part 25', the function of which is elucidated further below. Between profile 25 and profile 21 is arranged a lifting cylinder 26. The housing of lifting cylinder 26 supports against the underside of the profile 25, while the piston rod is pivotally connected to a foot 27 welded to the profile 21. The control and feed of the cylinder 26 takes place from the tractor 1.

The profile 25, 25' also serves as support for a circular plate 28 which serves as bottom plate for a buffer 29. The buffer 29 is a body of elastic material and is covered on the top side by a likewise circular plate 30, in the middle of which is placed a ball member 31.

By energizing cylinder 26 the support frame formed by the profiles 22, 23 and 25 can be moved up and downward in the direction of the arrow P1 relative to the frame 6. As a result the ball joint 31 can also be moved up and downward in this sense relative to frame 6. The central part 11 of the spray boom 2 is constructed from a top profile 35 and a bottom profile 36 running parallel thereto, which are mutually connected by standing profiles 37. A rectangular frame is thus created wherein on the inside thereof and against the underside of profile 35 a cup-shaped seat 38 is arranged for the ball joint 31. The location of cup 38 is such that it is situated close to the centre of gravity Z. According to a further feature of the invention pairs of return members generally designated by 40 are in each case indicated at an equal distance on either side of the centre of gravity Z, which return members are active between the up and downward moveable support frame in the second frame 6 or the frame 6 itself and the central part 11 of the spray boom.

The return member 40 for adjusting the spray boom in the vertical transverse plane behind the tractor is embodied here as a spring 41 which supports on the underside on the profile 35 of the central part 11 and at the top supports against the underside of the profile 23. Between both profiles 23 and 35 respectively a damper in the form of a hydraulic cylinder 42 is also arranged.

In order to limit the movement in the horizontal plane a damper 44 is arranged in each case between the profile 35 and 36 respectively of the central part 11 and the two standing profiles 20 of the frame 6.

Other arrangements are, of course, possible.

The action of the suspension of spray boom 2 relative to the second frame 6 and therefore relative to tractor 1 is as follows.

The placing of the universal pivot formed by the ball 31 and the cup 38 close to the centre of gravity Z of the spray boom means that the spray boom will undergo practically no return action as a result of its own weight, whereby the spray boom will always run practically parallel to the surface of the field, even if this field is situated on a slope. The return members 40 will in any case urge the boom 2 in the horizontal transverse plane behind the tractor 1 into this slanting position when the tractor drives over this slope. Should the angle of slope of the field change, then the boom 2 will gradually adapt to this position due to this return member 40.

If the tractor drives through a hollow or a furrow a rapid change will occur in the spacial position of the tractor 1 which, due to the spring/damping characteristic of the assembly 41, 42, exerts no influence on the spacial position of the boom. This therefore remains parallel to the surface of the field.

The return members 44 in the form of solid damping members, for example rubber pads, provide the turning of the spray boom 2 in the horizontal plane so that spray boom 2 will rapidly follow the change of direction of the tractor 1. The damping members 44 are preferably fixed to the profiles 35, 36 of middle part 11 so that if rocking occurs they remain in contact with the vertical profiles 20.

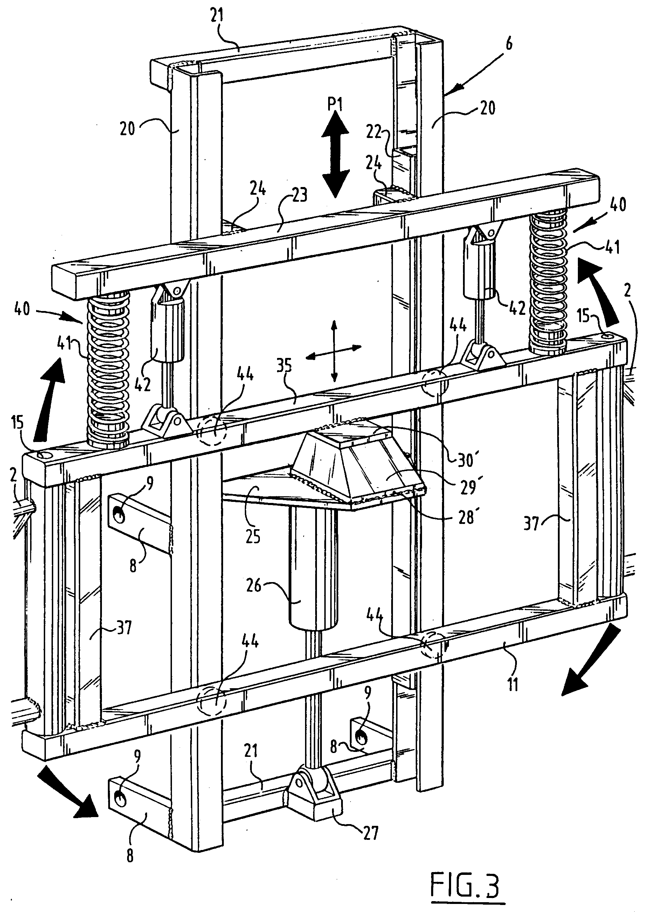

Fig. 3 shows an alternative embodiment of the suspension member. Use is made herein of a solid body 29' of elastic material, for example rubber, which is held between a suitably fitting bottom plate 28' and top plate 30'. The bottom plate 28' is fixed directly onto the support plate 25 between the posts 22 of the sub-frame, while the top plate 30' is fixed directly onto the beam 35 of the frame of the boom. The universal pivot of fig. 2 is therefore omitted here.

Such a suspension point assists the damping and returning action of the swinging movements of the boom 2 on the horizontal longitudinal axis, the vertical axis and the horizontal transverse axis.

In contrast to the embodiment of fig. 2, with this embodiment the horizontal sliding movement transversely of the direction of forward movement can also be absorbed better than in the comparatively rigid embodiment of fig. 2.

With predetermined dimensioning of the elastic body 29' the movements round the vertical axis can be damped by this body such that the return members 44 can be omitted if desired.

Other embodiments are possible within the scope of the invention. The return members 40 can for instance be formed by a spring/damping member other than shown here with spring 41 and damper 42.

The universal pivot formed by the ball 31 and cup 38 can likewise be embodied in a different manner.

## Claims

1. A device for spraying a liquid, such as herbicides, growth regulating and/or disinfectant substances, etc. over a field, said device comprising a boom (10) with spray nozzles to be moved over said field and extending transversely of the travel direction, said boom (10) being suspended for pivoting in or close to its central vertical plane on a mobile support frame (6), wherein at least a pair of return members (41, 42, 44) are arranged on either side of and at an equal distance from the point of suspension (31), **characterized in that** the point of suspension (31) is a universal pivot directly supported on said frame and situated close to the centre of gravity (Z) of the boom (10).

2. A device as claimed in claim 1, **characterized in that** the return member (41, 42) is a damped spring system.

3. A device as claimed in claim 1 and/or 2, **characterized in that** at least a pair of return members (44) is arranged such that these force away and/or damp said boom (10) in the horizontal plane.

4. A device as claimed in claim 1 and/or 2, **characterized in that** at least a pair of return members (41, 42) is arranged such that these force away and/or damp said boom (10) in the vertical plane.

5. A device as claimed in claim 1 and/or 2, **characterized in that** two pairs of return members are arranged, whereof the one pair (44) forces away and damps the boom in the horizontal plane, and whereof the other pair (41, 42) is active in the vertical plane of the boom (10).

6. A device as claimed in any of the foregoing claims, **characterized in that** the mobile support frame consists of a main frame (6) and a sub-frame (22, 24) arranged moveable therealong in vertical sense to support the boom (10).

7. A device as claimed in any of the foregoing claims, **characterized in that** the boom (10) is provided with a cup-shaped element (38) for receiving a ball (31) of the universal pivot, which ball is mounted on a buffer (29), close to the vertical central longitudinal plane thereof.

8. A device as claimed in any of the foregoing claims 1-6, **characterized in that** close to the vertical central longitudinal plane a block-shaped body (29') of elastic material is arranged as universal pivot between the boom (10) and the mobile support frame (6) or sub-frame (22, 24).

## Patentansprüche

1. Vorrichtung zum Sprühen einer Flüssigkeit wie Herbizide, Wachstumsregulatoren und/oder desinfizierende Substanzen usw. auf ein Feld, wobei die Vorrichtung einen Ausleger (10) mit Sprühdüsen aufweist, der über das Feld zu bewegen ist und sich quer zu der Bewegungsrichtung erstreckt, der Ausleger (10) zum Schwenken in oder nahe zu seiner mittleren vertikalen Ebene auf einem mobilen Tragrahmen (6) aufgehängt ist, bei der mindestens ein Paar von Rückstellteilen (41, 42, 44) auf beiden Seiten der Aufhängung (31) und in gleichen Abständen von dem Punkt der Aufhängung (31) angeordnet ist,
dadurch gekennzeichnet, daß der Punkt der Aufhängung (31) ein Universalgelenk ist, das direkt auf dem Rahmen gelagert ist und nahe dem Schwerpunkt (Z) des Auslegers (10) gelegen ist.

2. Vorrichtung nach Anspruch 1,
dadurch gekennzeichnet, daß das Rückstellteil (41, 42) ein gedämpftes Federsystem ist.

3. Vorrichtung nach Anspruch 1 und/oder 2,
dadurch gekennzeichnet, daß mindestens ein Paar von Rückstellteilen (44) derart angeordnet ist, daß diese den Ausleger (10) in der horizontalen Ebene wegdrücken und/oder dämpfen.

4. Vorrichtung nach Anspruch und/oder 2,
dadurch gekennzeichnet, daß mindestens ein Paar von Rückstellteilen (41, 42) derart angeordnet ist, daß diese den Ausleger (10) in der vertikalen Ebene wegdrücken und/oder dämpfen.

5. Vorrichtung nach Anspruch 1 und/oder 2,
dadurch gekennzeichnet, daß zwei Paare von Rückstellteilen angeordnet sind, wovon das eine Paar (44) den Ausleger in der horizontalen Ebene wegdrückt und dämpft und wovon das andere Paar (41, 42) in der vertikalen Ebene des Auslegers (10) aktiv ist.

6. Vorrichtung nach einem der vorhergehenden Ansprüche,
dadurch gekennzeichnet, daß der mobile Tragrahmen aus einem Hauptrahmen (6) und einem Unterrahmen (22, 24) besteht, der bewegbar daran entlang im vertikalen Sinne zum Tragen des Auslegers (10) angeordnet ist.

7. Vorrichtung nach einem der vorhergehenden Ansprüche,
dadurch gekennzeichnet, daß der Ausleger (10) mit einem becherförmigen Element (38) zum Aufnehmen einer Kugel (31) des Universalgelenkes versehen ist, wobei die Kugel auf einem Puffer (29) nahe der vertikalen mittleren Längsebene davon angebracht ist.

8. Vorrichtung nach einem der vorhergehenden Ansprüche 1 bis 6,
dadurch gekennzeichnet, daß nahe zu der vertikalen mittleren Längsebene ein blockförmiger Körper (29') aus elastischen Material als Universalgelenk zwischen dem Ausleger (10) und dem mobilen Tragrahmen (6) oder Unterrahmen (22, 24) angeordnet ist.

## Revendications

1. Un appareil pour pulvériser un liquide tel que des herbicides, des substances de désinfection et/ou de régulation de croissance, etc., sur un champ, ledit appareil comprenant une rampe (10) pourvue de buses de pulvérisation, destinée à se déplacer sur ledit champ et s'étendant transversalement à la direction de déplacement, ladite rampe (10) étant suspendue pour pivoter dans ou près de son plan vertical central sur un châssis de support mobile (6), dans lequel au moins une paire d'organes de rappel (41, 42, 44) sont disposés de chaque côté et à une distance égale par rapport au point de suspension (31), caractérisé en ce que le point de suspension (31) est un pivot universel monté directement sur ledit châssis et situé à proximité du centre de gravité (Z) de la rampe (10).

2. Un appareil selon la revendication 1, caractérisé en ce que l'organe de rappel (41, 42) est un système à ressort amorti.

3. Un appareil selon la revendication 1 et/ou 2, caractérisé en ce qu'au moins une paire d'organes de rappel (44) est disposée de manière que ceux-ci écartent et/ou amortissent ladite rampe (10) dans le plan horizontal.

4. Un appareil selon la revendication 1 et/ou 2, caractérisé en ce qu'au moins une paire d'organes de rappel (41, 42) est disposée de manière que ceux-ci écartent et/ou amortissent ladite rampe (10) dans le plan vertical.

5. Un appareil selon la revendication 1 et/ou 2, caractérisé en ce que deux paires d'organes de rappel sont disposées, l'une des paires (44) écartant par contrainte et amortissant la rampe dans le plan horizontal, et l'autre paire (41, 42) étant activée dans le plan vertical de la rampe (10).

6. Un dispositif selon l'une quelconque des précédentes revendications, caractérisé en ce que le châssis de support mobile consiste en un châssis principal (6) et un châssis secondaire (22, 24) montés mobiles le long de la direction verticale pour supporter la rampe (10).

7. Un dispositif selon l'une quelconque des précédentes revendications, caractérisé en ce que la rampe (10) est pourvue d'un élément en forme de cuvette (38) pour recevoir une sphère (31) du pivot universel, ladite sphère étant montée sur un amortisseur (29) à proximité du plan longitudinal central vertical de celui-ci.

8. Un appareil selon l'une quelconque des précédentes revendications 1 à 6, caractérisé en ce qu'à proximité du plan longitudinal central vertical il est agencé un corps en forme de bloc (29') en matériau élastique formant pivot universel entre la rampe (10) et le châssis de support mobile (6) ou le châssis secondaire (22, 24).
